# EUROPEAN PATENT SPECIFICATION

(11) **EP 2 417 065 B1**
(45) Date of publication and mention of the grant of the patent: **10.07.2013**
(21) Application number: 09752778.2
(22) Date of filing: 28.10.2009
(51) Int. Cl.: C02F 1/28, B01D 24/12, B01D 27/00

(54) **REPLACEABLE CARTRIDGE FILTER FOR FILTERING SYSTEMS, PARTICULARLY FOR THE TREATMENT OF DRINKING WATER, AND FILTERING SYSTEM INCLUDING SAID FILTER**
AUSTAUSCHBARES KARTUSCHENFILTER FÜR FILTERSYSTEME, INSBESONDERE ZUR BEHANDLUNG VON TRINKWASSER, UND FILTERSYSTEM MIT DEM FILTER
FILTRE À CARTOUCHE REMPLAÇABLE POUR SYSTÈMES FILTRANTS, EN PARTICULIER POUR LE TRAITEMENT D'EAU POTABLE, ET SYSTÈME FILTRANT COMPRENANT LEDIT FILTRE

(30) Priority: 10.04.2009 IT PD20090089
(43) Date of publication of application: 15.02.2012
(73) Proprietor: Laica S.p.A., 36021 Barbarano Vicentino (IT)
(72) Inventor: MORETTO, Maurizio, I-36100 Vicenza (IT)
(74) Representative: Locas, Davide
(86) International application number: PCT/EP2009/064178
(87) International publication number: WO 2010/115477

(56) References cited:
- WO-A-01/23307
- DE-A1- 19 610 172
- US-A- 260 106
- US-A- 5 635 063
- US-A1- 2009 084 726

## Description

### Technical field

The present invention relates to a replaceable cartridge filter for filtering systems, particularly for the treatment of drinking water, and a filtering system including said filter.

### Background art

In the relevant technical field, it is known to use filtering systems for the treatment of water for domestic use in which a replaceable cartridge filter is inserted in a sealed manner in a pipe of the filtering system so that the water passing through the pipe is forced to pass through the filter and the bed of filtering material contained therein. The filter is normally equipped with a peripheral annular rim which defines a sealing surface which is itself received in a watertight manner and retained in a seat of the pipe. With this system, jugs and kettles are produced which are arranged for the filtering and conditioning treatment of water for domestic use.

The cartridge filters employed in these systems may have filter beds of varied composition depending on the desired specific chemico-physical function. For example, filters may be used in which the filtering material is suitable for generic conditioning, or contains specific agents for correcting the hardness, removing flavours and odours, the selective removal of predetermined pollutants (chlorine, atrazine, heavy metals, pesticides) or even capable of carrying out bacteriological treatment of the water treated.

This therefore entails the need to employ filter beds of varied composition according to the type and degree of pollution of the water treated. It is further observed that some of the materials which form the filter bed may have a useful life which is different from the other materials. For example, the bacteriostatic components may effectively treat a significantly larger volume of liquid than, for example, the volume effectively treatable with ion exchange resins or active carbons. If, therefore, a filter is employed in which the components of the filter bed are distributed in the casing the filter must necessarily be substituted when the component having the shortest life is exhausted. Examples of this filters are disclosed in US 5,635,063 or In DE 196 10 172. This results in an unacceptably high cost of treatment of the filtered water, or in other words a useless but inevitable waste of active material.

### Description of the invention

The problem underlying the present invention is that of providing a cartridge filter and a filtering system functionally and structurally designed so as to remedy all the drawbacks mentioned with reference to the prior art cited. This problem is solved by the invention by means of a cartridge filter and a filtering system which are produced according to the following claims.

### Brief description of the drawings

The characteristics and advantages of the invention will become clearer from the detailed description of a preferred, but not exclusive, exemplary embodiment thereof, illustrated by way of non-limiting example with reference to the appended drawings, in which :

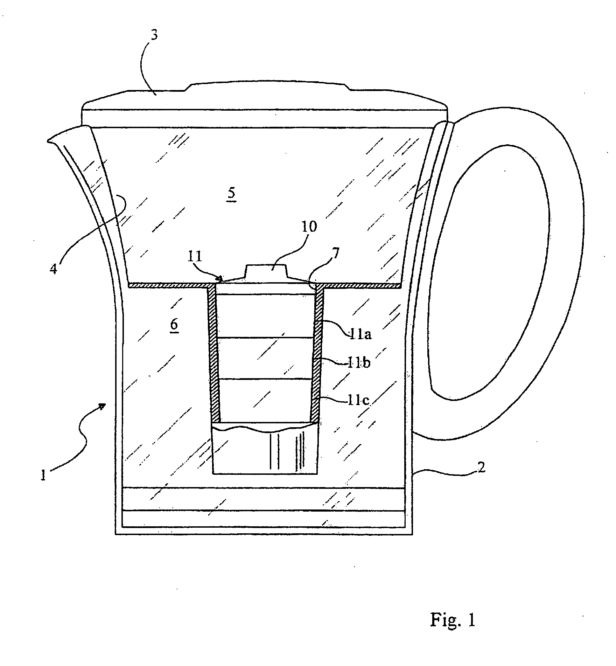

- Figure 1 is a partially sectional schematic view of a filtering system according to the invention;

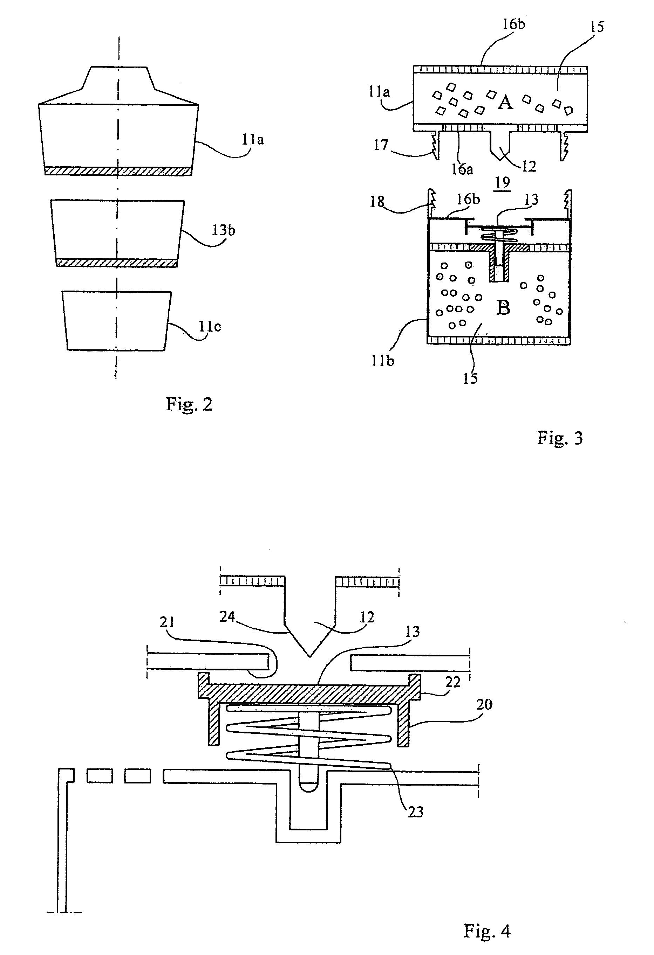

- Figure 2 is an exploded schematic view of a component of the system of Figure 1;
- Figure 3 is a sectional view of a detail of the component of Figure 2;
- Figure 4 is an enlarged view of the detail of Figure 3.

### Preferred embodiment of the invention

In the drawings, the reference 1 indicates as a whole a filtering system of the jug type for the conditioning of water for domestic use. The system 1 includes a jug 2 closed at the top by a removable lid 3 and into which is inserted a hopper 4 which divides the jug 2 into an upper bowl 5 intended to contain the water to be filtered and a lower bowl 6 intended to contain the filtered water. A cartridge filter 10 is removably seated in a seat provided in a pipe 7 of the hopper 4. The pipe 7 serves to decant by gravity the water admitted into the upper bowl 5 to the lower bowl 6, passing through the filter 10.

The filter 10 comprises a casing 11 for containing a filtering material disposed so as to form a filter bed 15 through which the fluid to be filtered can pass. The casing 11 is itself composed of a plurality of casing elements (at least two elements) 11a,b,c,...n, each containing at least one layer of filtering material preferably different from the adjacent layers of the bed 15 (or optionally the same, when it is wished to increase the thickness of the layer by combining two casing elements with each other).

Each casing element 11a-c can be handled individually and substituted individually in the filter 10 according to the specific chemico-physical characteristics of the layer of filtering material contained therein. In practice, each casing element with the filtering material contained therein forms a capsule that can be handled individually and substituted individually in the filter 10. It is to be understood, however, that the filter 10 may have a single casing 11 inside which are housed several capsules superposed or otherwise arranged to form the filter bed 15, the capsules in this case being able to be individually substituted in the casing 11.

The casing elements intended to be coupled to an adjacent element have, on opposed faces, respective mutual coupling devices of the key 12 and lock 13 type, which have the function of allowing functionally effective assembly with the adjacent elements only in the case of compatibility between keys and locks of the respective elements. In this way, the possibility of incompatible or non-original filtering capsules being assembled in the filter 10 and prejudicing or not ensuring correct and effective functioning is prevented.

In a preferred exemplary embodiment, the casing element 11a of a capsule has on one of the two axially opposed surfaces 16a, 16b (in the embodiment, the surface 16a) a first coupling collar 17 (for example threaded or with snap-in engagement or with friction or bayonet engagement) which can be connected to a second coupling collar 18 provided on the surface 16b of the adjacent casing element 11b such that, when the two collars 17, 18 are mutually engaged on each other, between the surfaces 16a, 16b of adjacent casing elements a pipe 19 is defined which places the two capsules in mutual fluid communication.

The surfaces 16a, 16b are made in the form of a perforated grille to allow the passage of fluid between the corresponding capsules.

Placed in the pipe 19 is a valve 20 carried on the casing element 11b and which has a valve seat 21 normally closed by a closure means 22 by the action of a spring 23. The valve 20 therefore functions as a means for intercepting the flow in the pipe 19.

From the surface 16a there extends axially an appendage 24 which functions as a device for operating the valve 20 by pressing the closure means 22 into the open position when the two casing elements 11a, 11b are engaged on each other. In this case the appendage 24 functions as a key and the valve 20 functions as a lock for enabling the coupling of adjacent capsules to one another.

The filtering layers in the capsules which form the filter 10 have a different function and composition. They may therefore have a different useful life since the filter 10, owing to the structure described, can be easily disassembled into the various capsules which form it, in order to be reassembled equally easily with prior substitution of the capsules which may be exhausted.

The invention thus solves the problem posed.

## Claims

1. A cartridge filter (10) for filtering systems (1) for fluids, particularly for the treatment of drinking water by means of percolating filtration, including a casing (11) for containing a bed (15) of filtering material in which said material is disposed in layers in order to be traversed by the fluid to be filtered, said filtering material is sub-divided into capsules that can be individually substituted in said casing (11) and each containing at least one of said layers, said capsules being able to be combined with one another to form said filter bed (15), **characterized in that** each capsule comprises a casing element (11a,b) that can be superposed on a casing element (11b,c) of an adjacent capsule to form said casing as a whole, so that said casing elements (11a-c) can be individually substitued, and wherein the filtering material in one capsule has a different composition and a different useful life from the material of the other capsules, wherein said capsules are provided with mutual coupling devices of the key-and-lock type (12, 13), so that the functionally effective assembly of said capsules is permitted only in the case of compatibility between keys (12) and locks (13) of the respective capsules, and further comprising at least one communicating pipe (19) between the casing elements (11a, b) of contiguous capsules and means (20) for intercepting the flow in said communicating pipe (19), said flow intercepting means (20) being operationally subject to the compatibility of coupling between said keys (12) and the respective locks (13).

2. A cartridge filter (10) according to claim 1, wherein said pipe (19) extends between contiguous casing elements (11a-c).

3. A cartridge filter (10) according to claim 2, wherein said flow intercepting means (20) comprise a normally closed blocking means (22) on one of said elements (lib) and an operating appendage (24) for operating said blocking means (22) on a contiguous element (lib), that are disposed in such a way that, on coupling said contiguous elements, the operating appendage (24) of one element (11a) interferes with, and opens, the blocking means (22) of the contiguous element (lib).

4. A cartridge filter (10) according to one or more of the preceding claims, wherein a threaded coupling is provided between adjacent casing elements (11a,b).

5. A cartridge filter (10) according to one or more of claims 1 to 4, wherein a bayonet or friction coupling or the like is provided.

6. A percolating filtration system (1) comprising a filter cartridge according to any of the preceding claims and two bowls (5,6) communicating via a pipe (7) in which a seat is defined for a cartridge filter (10) capable of being inserted in a sealed manner into said seat in such a way that the water passing through the pipe (7) is forced to pass through said filter (10).

## Patentansprüche

1. Kartuschenfilter (10) für Filtrationssysteme (1) für Flüssigkeiten, insbesondere zur Aufbereitung von Trinkwasser mittels Perkolationsfilterung, der ein Gehäuse (11) zur Aufnahme eines Bodens (15) aus Filtermaterial aufweist, in dem das Material in Schichten angeordnet ist, um von der zu filtrierenden Flüssigkeit durchströmt zu werden, wobei das Filtermaterial in Kapseln unterteilt ist, die einzeln im Gehäuse (11) ersetzt weden können und die jeweils mindestens eine von den Schichten enthalten, wobei die Kapseln in der Lage sind miteinander kombiniert zu werden um den Filterboden (15) zu bilden, **dadurch gekennzeichnet, dass** jede Kapsel ein Gehäuseelement (11a,b) umfasst, das auf ein Gehäuseelement (11b,c) einer angrezenden Kapsel überlagert werden kann, um das Gehäuse als Ganzes zu bilden, so dass Gehäuseelemente (11a-c) einzeln ersetzt werden können, und wobei das Filtermaterial in einer Kapsel eine unterschiedliche Zusammensetzung und eine unterschiedliche Nutzungsdauer vom Material der anderen Kapseln hat, wobei Kapseln mit gegenseitigen Verbindungsvorrichtungen vom Schlüssel-und-Schloss-Typ (12, 13) versehen sind, so dass die betriebswirksame Anordnung der Kapseln nur im Kompatibilitätsfall zwischen den Schlüsseln (12) und den Schlössern (13) der jeweiligen Kapseln erlaubt ist, und ferner umfassend mindestens ein Kommunikationsrohr (19) zwischen den Gehäuseelementen (11a, b) angrenzender Kapseln und eine Einrichtung (20) zur Unterbrechung der Strömung im Kommunikationsrohr (19), wobei die Unterbrechungseinrichtung der Strömung (20) betrieblich der Kompatibilität der Verbindung zwischen den Schlüsseln (12) und den entsprechenden Schlössern (13) unterliegt.

2. Kartuschenfilter (10) nach Anspruch 1, wobei sich das Rohr (19) zwischen angrenzenden Gehäuseelementen (11a-c) erstreckt.

3. Kartuschenfilter (10) nach Anspruch 2, wobei die Unterbrechungseinrichtung der Strömung (20) eine normalerweise geschlossene Blockierungseinrichtung (22) auf einem der Elemente (11b) und ein Betätigungs-Anhangsgebilde (24) zur Betätigung der Blockierungseinrichtung (22) auf einem angrenzenden Element (11b) umfasst, die derart angeordnet sind, dass, beim Verbinden angrenzender Elemente, das Betätigungs-Anhangsgebilde (24) eines Elements (11a) die Blockierungseinrichtung (22) des angrenzenden Elements (11b) beeinträchtigt und öffnet.

4. Kartuschenfilter (10) nach einem oder mehreren der vorhergehenden Ansprüchen, wobei eine Schraubverbindung zwischen angrenzenden Gehäuseelementen (11a,b) vorgesehen ist.

5. Kartuschenfilter (10) nach einem oder mehreren der Ansprüche 1 bis 4, wobei eine Bajonett - oder eine Rutschverbindung oder dergleichen vorgesehen ist.

6. Perkolationsfiltrationssystem (1) umfassend eine Filterkartusche nach einem der vorhergehenden Ansprüchen und zwei Behälter (5,6) die mittels eines Rohres (7) kommunizieren, in dem ein Sitz für einen Kartuschenfilter (10) festgelegt ist, welcher in abgedichter Weise in den gennanten Sitz derart eingeführt werden kann, dass das Wasser, das das Rohr (7) durchfliesst, gezwungen ist durch den Filter (10) zu kommen.

## Revendications

1. Filtre à cartouche (10) pour systèmes filtrants (1) pour fluides, en particulier pour le traitement de l'eau potable au moyen de la filtration biologique, comprenant un boîtier (11) pour contenir un lit (15) de matériau filtrant dans lequel ledit matériau est disposé en couches afin d'être traversé par le fluide à filtrer, ledit matériau filtrant est divisé en capsules qui peuvent être individuellement remplacées dans ledit boîtier (11) et chacune contenant au moins l'une desdites couches, lesdites capsules pouvant être combinées les unes avec les autres afin de former ledit lit filtrant (15), **caractérisé en ce que** chaque capsule comprend un élément de boîtier (11a,b) qui peut être superposé sur un élément de boîtier (11b,c) d'une capsule adjacente afin de former ledit boîtier dans son ensemble, de sorte que lesdits éléments de boîtier (11a-c) peuvent être individuellement remplacés, et dans lequel le matériau filtrant dans une capsule a une composition différente et une durée de vie différente du matériau des autres capsules, dans lequel lesdites capsules sont prévues avec des dispositifs de couplage mutuel du type à clé et serrure (12, 13) de sorte que l'assemblage fonctionnellement effectif desdites capsules est uniquement autorisé en cas de compatibilité entre les clés (12) et les serrures (13) des capsules respectives, et comprenant en outre au moins un tuyau de communication (19) entre les éléments de boîtier (11a,b) de capsules contiguës et des moyens (20) pour intercepter l'écoulement dudit tuyau de communication (19), lesdits moyens d'interception d'écoulement (20) étant opérationnellement soumis à la compatibilité du couplage entre lesdites clés (12) et les serrures (13) respectives.

2. Filtre à cartouche (10) selon la revendication 1, dans lequel ledit tuyau (19) s'étend entre des éléments de boîtier (11a-c) contigus.

3. Filtre à cartouche (10) selon la revendication 2, dans lequel lesdits moyens d'interception d'écoulement (20) comprennent des moyens de blocage (22) normalement fermés sur l'un desdits éléments (11b) et un appendice opérationnel (24) pour actionner lesdits moyens de blocage (22) sur un élément contigu (11b) qui sont disposés de sorte que, suite au couplage desdits éléments contigus, l'appendice opérationnel (24) d'un élément (11a) interfère avec et ouvre les moyens de blocage (22) de l'élément contigu (11b).

4. Filtre à cartouche (10) selon une ou plusieurs des revendications précédentes, dans lequel un couplage fileté est prévu entre des éléments de boîtier (11a,b) adjacents.

5. Filtre à cartouche (10) selon une ou plusieurs des revendications 1 à 4, dans lequel un couplage à baïonnette ou à friction ou similaire est prévu.

6. Système de filtration biologique (1) comprenant une cartouche de filtre selon l'une quelconque des revendications précédentes et deux bols (5, 6) communiquant via un tuyau (7) dans lequel un siège est défini pour un filtre à cartouche (10) pouvant être inséré d'une manière étanche dans ledit siège de sorte que l'eau passant par le tuyau (7) est obligée de passer par ledit filtre (10).
